# EUROPÄISCHE PATENTANMELDUNG

(11) **EP 1 647 347 A2**
(43) Veröffentlichungstag der Anmeldung: **19.04.2006**
(21) Anmeldenummer: 05109273.2
(22) Anmeldetag: 06.10.2005
(51) Int. Cl.: B23H 7/10, B23H 7/26

(54) **Verfahren und Vorrichtung zum Elektroerodieren von Werkstücken**

(30) Priorität: 14.10.2004 DE 102004050049
(71) Anmelder: ROBERT BOSCH GMBH, 70442 Stuttgart (DE)
(72) Erfinder: Hohmann, Eugen, 96191, Viereth-Trunstadt (DE); Dieterle, Martin, 71636, Ludwigsburg (DE)

(57) **Zusammenfassung**

Vorrichtung zum Elektroerodieren von Werkstücken weist eine erste Grobvorschub-Vorrichtung (10) auf, mit der der Erodierdraht (1) bzw. dessen Spitze schnell an die Oberfläche des Werkstücks angenähert werden kann. Weiter ist eine Vorschubvorrichtung (16) vorhanden, die beispielsweise mit Hilfe eines Piezoaktors einen sehr feinen Vortrieb der Erodierdrahtspitze ermöglicht, um insbesondere kleine Ausnehmungen herzustellen. Darüber hinaus wird ein Verfahren beschrieben, das mit der Vorrichtung durchgeführt wird und bei dem abwechselnd die Grobvorschub-Vorrichtung und die Vorschubvorrichtung zum Einsatz kommen, um insbesondere sehr kleine Bohrungen mit hoher Genauigkeit und mit einer hohen Oberflächengüte herzustellen.

## Beschreibung

### Stand der Technik

Die Erfindung geht von einer Erodiervorrichtung zur Erzeugung von Ausnehmungen in Werkstücken aus, wie sie aus der Offenlegungsschrift DE 101 55 607 A1 bekannt ist. Eine solche Erodiervorrichtung weist einen mit einer Spannungsquelle verbindbaren Erodierdraht auf, so dass zwischen dem Erodierdraht in dem Werkstück eine hohe Spannung anlegbar ist. Der Erodierdraht ist durch eine Führung so geführt, dass die Spitze des Erodierdrahts an die gewünschte Stelle des Werkstücks heranführbar ist. Wird ein Strom mit entsprechend hoher Spannung zwischen dem Werkstück und dem Erodierdraht angelegt, kommt es bei einem entsprechend kleinen Abstand zu einem Funkenüberschlag zwischen der Drahtspitze und dem Werkstück, was zu einem Materialabtrag am Werkstück führt, so dass Ausnehmungen verschiedenster Größe und Form im Werkstück herstellbar sind.

Weiter ist aus der Offenlegungsschrift DE 101 55 607 A1 ein Verfahren zum Einbringen von Ausnehmungen in Werkstücken bekannt, bei dem der Erodierdraht mit einer Grobschubeinrichtung bewegbar ist, die zum Annähern der Erodierdrahtspitze an das Werkstück dient. Die Grobvorschub-Einrichtung besteht hierbei aus zwei Vorschubrollen, die durch geeignete Elektromotoren bewegt werden und die den Erodierdraht zwischen sich einklemmen. Zur Durchführung des Erodierprozesses ist es jedoch wichtig, dass zwischen der Erodierdrahtspitze und dem Werkstück stets ein konstanter Spalt der gewünschten Größe verbleibt, um den Funkenüberschlag und damit den Materialabtrag am Werkstück zu gewährleisten. Diese Feinsteuerung wird in der DE 101 55 607 A1 durch ein Magnetfeld erreicht, durch welches der Erodierdraht geleitet ist. Je nach Stärke des Erodierstroms ergibt sich eine mehr oder weniger starke, den Erodierdraht auslenkende Lorentz-Kraft, die die Erodierdrahtspitze vom Werkstück wegzieht oder annähert. Durch diese selbstregelnde Vorrichtung kann der Spalt in einem gewissen Bereich konstant gehalten werden.

Die bekannte Erodiervorrichtung und das damit durchgeführte Erodierverfahren weisen hierbei jedoch den Nachteil auf, dass die Vorschubregelung des Erodierdrahts relativ grob ist. Dadurch ist es schwierig, kleine Ausnehmungen, insbesondere kleine Bohrungen, in der gewünschten Präzision und mit der gewünschten Oberflächenqualität herzustellen, da in die Selbstregelung des Erodier-Spalts nicht eingegriffen werden kann. Außerdem erschwert die Selbstregelung eine äußerst präzise Führung des Erodierdrahts, was sich vor allem bei sehr kleinen Bohrungen und Ausnehmungen ungünstig bemerkbar macht.

### Vorteile der Erfindung

Die erfmdungsgemäße Erodiervorrichtung weist demgegenüber den Vorteil auf, dass sich sehr präzise Ausnehmungen an einem Werkstück herstellen lassen, insbesondere Bohrungen mit sehr kleinem Durchmesser. Hierzu ist eine Vorschubeinrichtung vorhanden, die mit einer Klemmvorrichtung verbunden ist. Die Klemmvorrichtung ist so ausgestaltet, dass damit der Erodierdraht festklemmbar ist, so dass der Erodierdraht durch die Vorschubeinrichtung sehr präzise in Richtung des Werkstücks bewegt werden kann. Dadurch lassen sich Bohrungen mit sehr geringer Toleranz gegenüber den vorgegebenen Abmessungen herstellen. Da der Erodierprozess direkt gesteuert wird, ist es auch möglich, weitere Parameter in die Überwachung des Vorgangs einzubeziehen und damit insbesondere den Anfang und das Ende des Erodierprozesses sehr genau zu steuern.

Durch die abhängigen Ansprüche sind vorteilhafte Ausgestaltungen des Gegenstandes der Erfindung möglich. In einer ersten vorteilhaften Ausgestaltung ist die Klemmvorrichtung als Hülse ausgebildet, deren Umfang variabel ist, so dass der Erodierdraht mit der Hülse geklemmt werden kann. In vorteilhafter Weise ist diese Hülse auf einem Haltearm befestigt, der mit der Vorschubeinheit verbunden ist. Insbesondere, wenn die Vorschubeinheit einen Piezoantrieb aufweist, können äußerst präzise Bewegungen des Erodierdrahts bzw. der Spitze des Erodierdrahts durchgeführt werden, die bis in den Nanometer-Bereich steuerbar sind. Die Klemmvorrichtung wird in diesem Fall in vorteilhafter Weise benutzt, um die Spannung von der Spannungsquelle auf den Erodierdraht zu übertragen. Durch das feste Klemmen der Klemmvorrichtung auf den Erodierdraht ist eine verlustarme Überleitung des Erodierstroms auf den Erodierdraht über die Klemmvorrichtung gewährleistet.

In einer weiteren vorteilhaften Ausgestaltung weist die Erodiervorrichtung neben der Vorschubeinrichtung eine Grobvorschub-Einrichtung auf, durch die der Erodierdraht rasch und über die größere Entfernungen an das Werkstück angenähert werden kann. Vorteilhafterweise arbeitet die Grobvorschub-Einrichtung und die Vorschubeinrichtung mit der damit verbundenen Klemmvorrichtung so zusammen, dass entweder die Grobvorschub-Einrichtung oder die Klemmvorrichtung abwechselnd den Erodierdraht bewegen, so dass über die Grobvorschub-Einrichtung eine schnelle Annäherung der Drahtspitze an das Werkstück erreicht werden kann, während mit der Vorschubeinrichtung der eigentliche Erodiervorgang gesteuert wird.

In einer weiteren vorteilhaften Ausgestaltung ist an der der Erodiervorrichtung entgegengesetzten Seite des Werkstücks ein optischer Sensor vorgesehen, durch welchen der Durchbruch des Erodierdrahts detektierbar ist. Durch eine Verbindung des Sensors mit einem Steuergerät, das den gesamten Erodiervorgang steuert, lässt sich so sehr präzise der kritische Moment steuern, an dem der Erodierdraht das Werkstück durchdringt. Besonders vorteilhaft ist es hierbei, wenn der optische Sensor und das Steuergerät eine Spektralanalyse des emittierten Lichts durchführen, da so auch Rückschlüsse auf die Werkstoffzusammensetzung möglich sind. Es kann auch vorgesehen sein, zusätzlich oder statt dessen einen elektromagnetischen Sensor zu verwenden, durch welchen die beim Erodiervorgang entstehende elektromagnetische Strahlung aufgefangen und einer Auswerteeinheit zugeleitet werden. Diese elektromagnetische Strahlung, die bei bei allen E-rodiervorgängen entstehen und die stets nach außen abgeschirmt werden, lässt nach einer entsprechenden Analyse Rückschlüsse auf das Erodierverfahren zu, so dass der Prozess präzise gesteuert werden kann.

In einem erfindungsgemäßen Verfahren zum Einbringen von Ausnehmungen in ein Werkstück mittels Elektroerosion ist eine Grobvorschub-Einrichtung vorhanden, über die der Erodierdraht zuerst so weit an das Werkstück angenähert wird, dass die Spitze in einer Entfernung zum Werkstück ist, die den Start des Erosionsverfahrens ermöglicht. Anschließend wird der Erodierdraht von der Grobvorschub-Einrichtung freigegeben und der Erodierdraht wird durch die Klemmvorrichtung, die mit der Vorschubeinheit verbunden ist, geklemmt. Die weitere Bewegung der Erodierdrahtspitze geschieht durch die Vorschubeinheit, so dass eine sehr präzise Fertigung der Ausnehmungen im Werkstück möglich ist. Durch das abwechselnde Verwenden einer sehr feinen Vorschubeinrichtung und einer Grobvorschub-Einrichtung lässt sich eine präzise Ausnehmung im Werkstück fertigen, ohne dass sich die Prozesszeit gegenüber dem herkömmlichen Verfahren wesentlich verlängert.

### Zeichnung

In der Zeichnung sind erfmdungsgemäße Erodiervorrichtungen schematisch dargestellt. So zeigt
- Figur 1: eine schematische Darstellung der erfmdungsgemäßen Erodiervorrichtung,
- Figur 2, 3, 4 und 5: zeigen verschiedene Stellungen der Erodiervorrichtung bei der Durchführung des erfindungsgemäßen Verfahrens,
- Figur 6: zeigt eine weitere Illustration, die den Vorschub des Erodierdrahts näher zeigt und
- Figur 7a bis Figur 7c: zeigen eine Erodiervorrichtung, bei der ein Sensor zum Einsatz kommt.

### Beschreibung des Ausführungsbeispiels

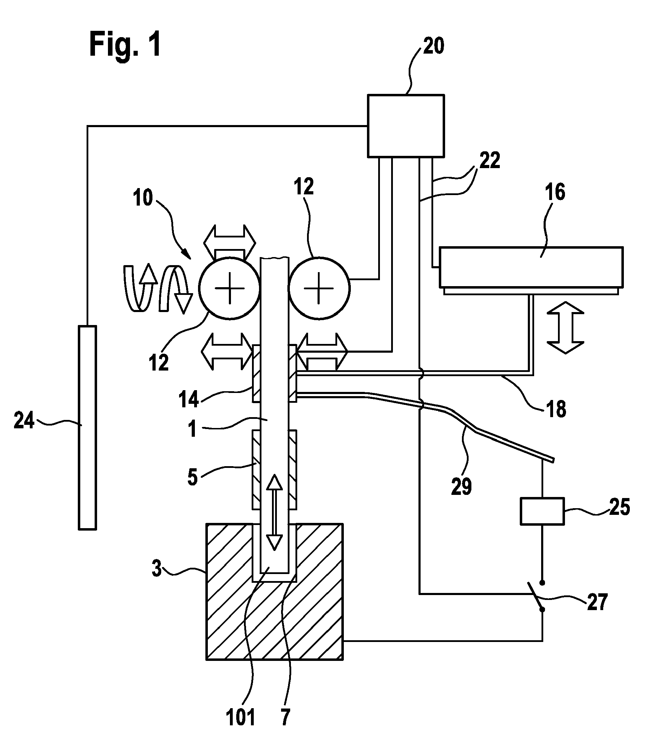

Figur 1 zeigt schematisch den Aufbau der erfindungsgemäßen Erodiervorrichtung. Kernstück der Erodiervorrichtung ist der Erodierdraht 1, dessen Drahtspitze 101 einem Werkstück 3 zugewandt ist, in das eine Ausnehmung 7 eingebracht werden soll, die hier bereits gezeigt ist. Der Erodierdraht 1 wird in einer Führung 5 geführt, um eine präzise Ausrichtung der Erodierdrahtspitze 101 zu erreichen, damit die Ausnehmung an der gewünschten Stelle des Werkstücks entsteht. Der Erodierdraht 1 wird von einer GrobvorschubEinrichtung 10 bewegt, die zwei Vorschubrollen 12 aufweist, die den Erodierdraht 1 einklemmen. Die Vorschubrollen 12 sind drehbar gelagert und durch einen entsprechenden Elektromotor, beispielsweise einen Schrittmotor, angetrieben. Dadurch kann die Erodierdrahtspitze 101 vor- und zurückgezogen werden, was durch den Doppelpfeil auf dem Erodierdraht 1 angedeutet ist. Zwischen der Grobvorschub-Einrichtung 10 und der Führung 5 führt der Erodierdraht 1 durch eine Klemmvorrichtung 14, in der der Erodierdraht 1 einklemmbar ist. Die Klemmvorrichtung 14 ist hierbei über einen Haltearm 18 mit einer Vorschubeinrichtung 16 verbunden, so dass die Klemmvorrichtung 14 durch die Vorschubeinrichtung 16 in Längsrichtung des Erodierdraht 1 bewegt werden kann. Ist der Erodierdraht 1 durch die Klemmvorrichtung 14 eingeklemmt, kann die Erodierdrahtspitze 101 somit auch durch die Vorschubeinrichtung 16 auf das Werkstück 3 zu oder von diesem weg bewegt werden.

Damit eine Abtragung von Material stattfmdet, muss zwischen dem Erodierdraht 1 und dem Werkstück 3 eine geeignete Spannung angelegt werden. Die Spannung wird mittels einer Spannungsquelle 25 erzeugt, die sowohl mit der Klemmvorrichtung 14 als auch mit dem Werkstück 3 verbunden ist. In dem Stromkreis ist ein Schalter 27 vorgesehen, so dass auch die Erzeugung einer gepulsten Spannung im Stromkreis möglich ist, in dem der Schalter 27 abwechselnd den Stromkreis schließt und unterbricht. Die Kontaktierung des Erodierdrahts 1 erfolgt beim Erodieren über die Klemmvorrichtung 14, wie in Figur 1 dargestellt. Hierbei wird der gesamte Erodiervorgang mittels einer elektrischen Steuereinheit 20 gesteuert, die die Grobvorschub-Einrichtung 10, die Klemmvorrichtung 14, die Vorschubeinrichtung 16 und den Schalters 27 steuert.

Durch den Funkenüberschlag zwischen der Erodierdrahtspitze 101 und dem Werkstück 3 kommt es zu einem Materialabtrag am Werkstück 3, so dass mit der Zeit eine Ausnehmung 7 entsteht, deren Form und Tiefe durch den Vorschub des Erodierdrahts 1 bestimmt werden kann. Hierbei ist es wichtig, dass stets ein geeigneter Abstand zwischen der Erodierdrahtspitze 101 und der Oberfläche des Werkstücks 3 eingehalten wird, um einen optimalen Arbeitsprozess sicherzustellen. Da die hier gezeigte Erodiervorrichtung hauptsächlich dafür gedacht ist, sehr kleine Ausnehmungen herzustellen, beispielsweise Bohrungen mit einem Durchmesser von unter 100 µm und einer Tiefe von weniger als 2 mm, ist eine sehr empfmdliche Steuerung der Vorschubeinrichtung 16 notwendig. Für diesen Zweck eignen sich gut Vorschubeinrichtungen 16, die einen Piezoantrieb aufweisen, wodurch sich einerseits sehr präzise der Vorschub regeln lässt und andererseits eine sehr schnelle Regelung des Erodiervorgangs ermöglicht wird.

Die Steuerung des gesamten Erodiervorgangs wird von einer elektrischen Steuereinheit 20 übernommen, die die Grobvorschub-Einrichtung 10, die Vorschubeinrichtung 16 und die Erodierspannung steuert. Als Eingangsgröße dient zum einen der Erodierstrom, aus dessen Höhe beispielsweise der Abstand der Erodierdrahtspitze 101 vom Werkstück abgeleitet werden kann. Um eine weitere Eingangsgröße zu gewinnen macht man sich den Umstand zunutze, dass es beim Erodieren zur Abstrahlung von elektromagnetischer Strahlung kommt. Diese Strahlung kann recht intensiv sein und muss im Regelfall nach außen abgeschirmt werden, um Störeinflüsse auf die Umgebung zu vermeiden. Aus dem Frequenzspektrum und der Intensität dieser Strahlung lassen sich jedoch auch Rückschlüsse auf den Erodierprozess ziehen, so dass die elektromagnetische Strahlung als weitere Eingangsgröße für die Steuereinheit 20 dienen kann. Hierzu ist ein elektromagnetischer Sensor 24 vorgesehen, die geeignet ist, die elektromagnetische Strahlung aufzufangen und dem Steuergerät 20 zuzuführen, wo die entsprechende Analyse stattfindet.

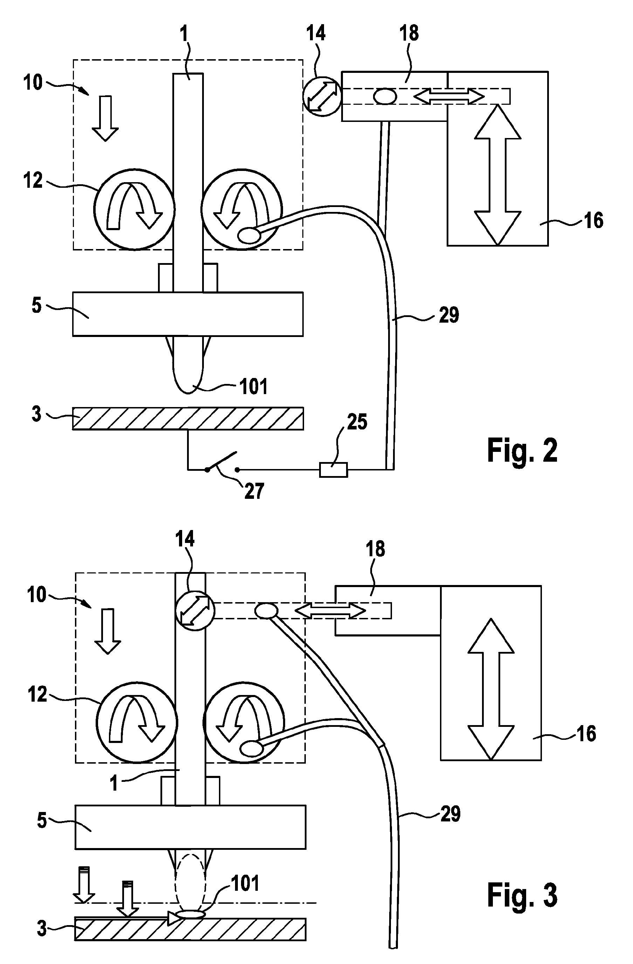

In den Figuren 2, 3, 4 und 5 ist das erfindungsgemäße Erodierverfahren in den wesentlichen Schritten erläutert. Figur 2 zeigt wiederum den schematischen Aufbau der Erodiervorrichtung, wobei nur die für das Verfahren wichtigen Elemente dargestellt sind. Die Erodiervorrichtung umfasst eine Grobvorschub-Einrichtung 10, in der die beiden drehbar gelagerten Vorschubrollen 12 angeordnet sind. Die Grobvorschub-Einrichtung 10 lässt sich hierbei auch insgesamt bewegen, so dass auch große Strecken rasch durchfahren werden können. Der Erodierdraht 1 wird durch die Führung 5 geführt, die auch als Erodierbrücke bezeichnet wird. Der Erodierdraht 1 ist anfänglich zwischen den Vorschubrollen 12 eingeklemmt, die durch ihre Drehung einen Vorschub des Erodierdraht 1 bewirken. Die Erodierdrahtspitze 101 wird durch die Grobvorschub-Einrichtung 10, d.h., mittels Verschiebung derselben in Längsrichtung des Erodierdraht 1 oder durch Drehung der Vorschubrollen 12, soweit dem Werkstück 3 angenähert, dass eine Erosion stattfinden kann. Die Spannungsquelle 25 ist hierbei sowohl mit dem Werkstück 3 als auch mit den Vorschubrollen 12 verbunden, so dass zwischen den Vorschubrollen 12 und dem Werkstück 3 eine Testspannung angelegt werden kann. Über den fließenden Strom, der bei einem genügend kleinen Abstand zum Werkstück 3 fließt, lässt sich die Annäherung der Erodierdrahtspitze 101 präzise steuern. Die Vorschubvorrichtung 16, die über den Haltearm 18 die Klemmvorrichtung 14 bewegen kann, ist in dieser Phase noch ohne Funktion. Hat sich die Erodierdrahtspitze 101 nahe genug dem Werkstück 3 angenähert, so fährt der Haltearm 18 die Klemmvorrichtung 14 so weit in die Erodiervorrichtung, bis diese den Erodierdraht umgreift und schließlich einklemmt. Zwischen dem Werkstück 3 und der Klemmvorrichtung 14 kann jetzt die Erodierspannung angelegt werden. Dieser Schritt des Erodierprozesses ist in Figur 3 dargestellt.

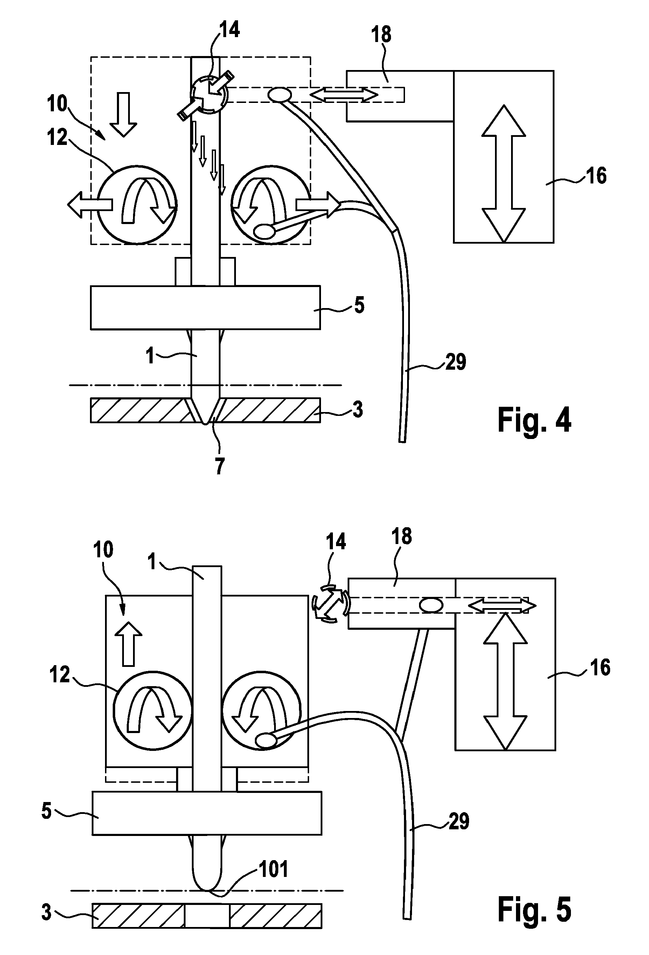

Da beim eigentlichen Erodiervorgang der Erodierdraht 1 durch die Vorschubeinrichtung 16 bewegt wird, werden jetzt-wie in Figur 4 dargestellt - die Vorschubrollen 12 auseinander gefahren, so dass der Erodierdraht 1 nur noch durch die Klemmvorrichtung 14 gehalten wird. Für den Erodiervorgang wird jetzt zwischen der Klemmvorrichtung 14 und dem Werkstück 3 eine geeignete Erodierspannung angelegt, so dass zwischen der Erodierdrahtspitze 101 und dem Werkstück 3 ein Funkenüberschlag stattfindet, der schließlich Material aus dem Werkstück 3 abträgt. Durch die sich bildende Ausnehmung 7 ändert sich stetig die Größe des Erodierspalts, also der Abstand zwischen der Erodierdrahtspritze 101 und dem Werkstück 3, so dass der Erodierdraht 1 ständig nachgeführt werden muss. Dieser Vorschub wird über die Vorschubeinrichtung 16 gesteuert, die über den Haltearm 18 die Klemmvorrichtung 14 und damit den Erodierdraht 1 in Richtung des Werkstücks 1 bewegt. Die Vorschubeinrichtung 16 besteht hierbei im wesentlichen aus einem Piezoaktor, der eine genügende Länge und einen ausreichenden Hub aufweist, um den gesamten Erodierprozess durchfiihren zu können.

In Figur 5 zeigt das Ende des Erodierprozesses, nachdem die Ausnehmung 7 in das Werkstück 3 eingebracht worden ist. Die Vorschubrollen 12 fahren wieder in Kontakt mit dem Erodierdraht 1 und klemmen diesen neu ein, während die Klemmvorrichtung 14 vom Erodierdraht 1 gelöst und durch den Haltearm 18 aus der Grobvorschub-Einrichtung 10 entfernt wird. Über die Vorschubrollen 12 wird der Erodierdraht 1 zurückgezogen und der Erodierprozess ist beendet. Das Werkstück 3 kann ausgetauscht oder in eine neue Position verfahren werden, so dass eine neue Ausnehmung gefertigt werden kann.

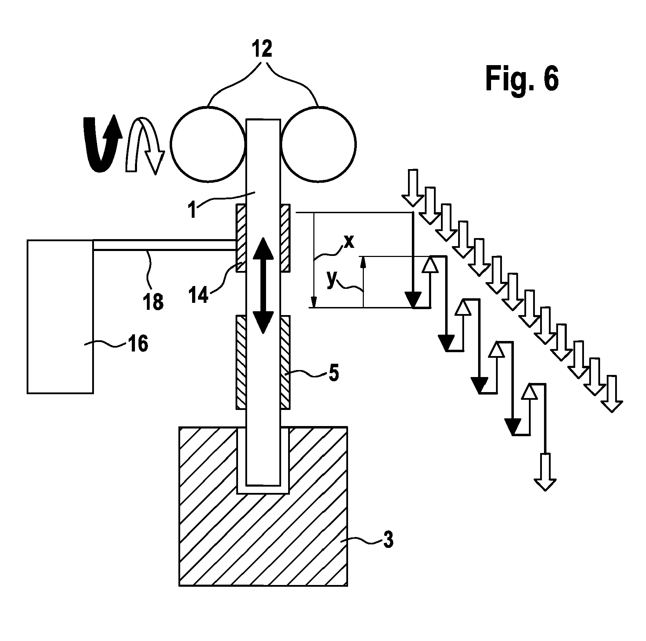

In Figur 6 zeigt eine Illustration der Bewegung des Erodierdrahts 1, wie sie durch die Vorschubeinrichtung 16 durchgeführt werden kann. Anders als oben beschrieben kann die Größe des Erodierspalts auch in engen Grenzen gezielt periodisch verändert werden, um eine bessere Oberflächengüte der Ausnehmung 7 zu erreichen. Hierzu wird der Erodierdraht 1 in kleinen Schritten vorwärts bewegt, hier durch eine Strecke x angedeutet. Diese Strecke liegt beispielsweise im Bereich von 10 nm. Anschließend wird der Erodierdraht 1 durch die Vorschubeinheit 16 eine Strecke y wieder zurückgezogen, die kleiner ist als die Strecke x, beispielsweise 5 nm. Durch diese Methode der Vorwärtsbewegung lässt sich die Oberflächengüte der Ausnehmung 7 deutlich verbessern, was um so wichtiger ist, je kleiner die Abmessungen der Ausnehmung 7 sind.

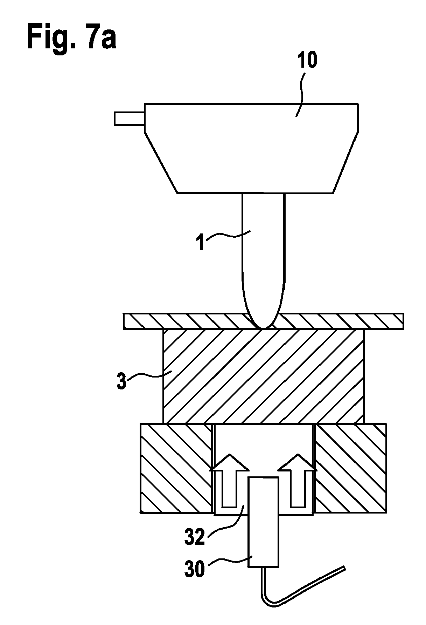

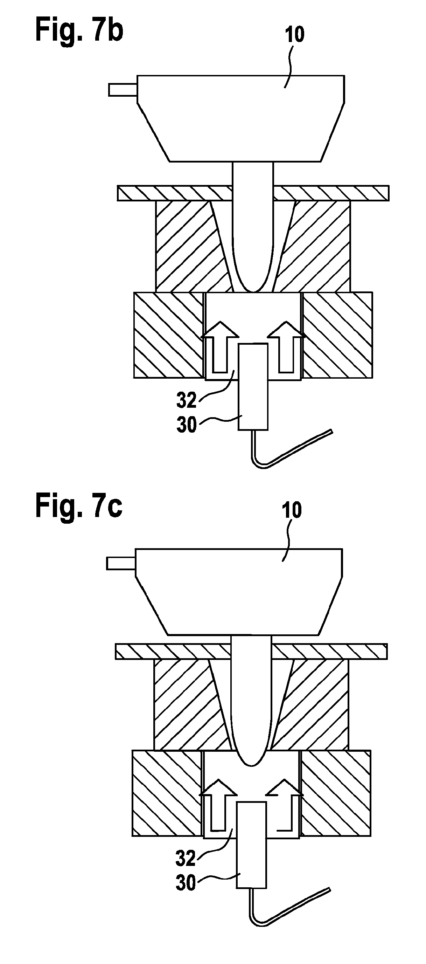

Beim Herstellung von Bohrungen, also Ausnehmungen 7, die das Werkstück 3 durchsetzen, ist die Phase, in der der Erodierdraht 1 das Werkstück 1 durchdringt, besonders kritisch. In Figur 7a, 7b und 7c ist die Anwendung eines optischen Sensors 30 dargestellt, mit dessen Hilfe dieser Moment des Erodiervorgangs besser gesteuert werden kann. Figur 7a zeigt den Beginn des Erodiervorgangs, bei dem eine Vorschubeinrichtung 10' die Spitze des Erodierdrahts 1 auf das Werkstück 3 absenkt, so dass der Erodierprozess gestartet werden kann. Der Einfachheit halber ist die Vorschubvorrichtung 10' hier nur schematisch dargestellt, die sowohl eine Grobvorschub-Einrichtung als auch eine Vorschubeinrichtung für den Feinvortrieb umfassen kann.

Von unten her, also von der der Erodiervorrichtung abgewandten Seite des Werkstücks 3, wird das Werkstück 3 mit einer Spüllösung in einem Spülraum 32 beaufschlagt, um den Materialabtrag aus diesem Bereich wegzuspülen. Ein optischer Sensor 30 ist auf dieser Seite des Werkstücks 3 angeordnet, der das Licht, das beim Erodiervorgang erzeugt wird, detektieren kann. Sobald der optische Sensor 30 Licht registriert, kann dieses Signal zur weiteren Steuerung des Erodiervorgangs benutzt werden, um ein präzises Ende des Erodiervorgangs zu steuern und so eine präzise Auslaufkante der Ausnehmung 7 zu erreichen. Figur 7b zeigt den Zeitpunkt, zu dem der Erodierdraht 1 das Werkstück 3 gerade durchdringt und ein optisches Signal vom optischen Sensor 30 registriert wird. Figur 7c zeigt schließlich das Ende des Erodiervorgangs, nachdem durch den Erodierdraht 1 die vollständige Form der Ausnehmung 7 gefertigt worden ist.

Der optische Sensor 30 ist ebenfalls mit dem Steuergerät 20 verbunden, wo die Auswertung der Sensorsignale stattfindet, die dann wiederum als Eingangsgröße für die Steuerung des Erodiervorgangs dienen. Es kann auch vorgesehen sein, den optischen Sensor 30 und das Steuergerät 20 so auszugestalten, dass eine Spektralanalyse der optischen Signale ermöglicht wird. Dadurch lassen sich Aussagen über die Zusammensetzung des Werkstoffmaterials machen und damit auch über momentane Betriebsparameter des Erodiervorgangs.

Es kann neben der Verwendung des optischen Sensors 30 auch vorgesehen sein, gleichzeitig oder alternativ den elektromagnetischen Sensor 24 zu benutzen, um die elektromagnetische Strahlung, die vom Erodiervorgang ausgeht, aufzufangen. Besonders die Verwendung beider Signale erlaubt eine sehr präzise Steuerung des Erodiervorgangs, wie es insbesondere bei der Ausgestaltung von kleinen Ausnehmungen 7 vorteilhaft ist.

## Patentansprüche

1. Erodiervorrichtung zur Erzeugung von Ausnehmungen (7) in Werkstücken (3) mit einem Erodierdraht (1) und mit einer Spannungsquelle (25), die mit dem Erodierdraht (1) verbindbar ist und durch welche eine Spannung zwischen dem Werkstück (3) und dem Erodierdraht (1) anlegbar ist, **dadurch gekennzeichnet, dass** eine Vorschubvorrichtung (16) vorhanden ist, welche mit einer Klemmvorrichtung (14) verbunden ist, mit der der Erodierdraht (1) festklemmbar ist, wobei die Klemmvorrichtung (14) mittels der Vorschubeinheit (16) in Längsrichtung des Erodierdrahts (1) so bewegbar ist, dass die Erodierdrahtspitze (101) an das Werkstück angenähert werden kann.

2. Erodiervorrichtung nach Anspruch 1, **dadurch gekennzeichnet, dass** die Klemmvorrichtung (14) eine im Durchmesser verstellbare Hülse ist, deren Umfang soweit vermindert werden kann, dass die Hülse kraftschlüssig den Erodierdraht (1) umfasst und damit festklemmt.

3. Erodiervorrichtung nach Anspruch 1 oder 2, **dadurch gekennzeichnet, dass** die Klemmvorrichtung (14) an einem Haltearm (18) befestigt ist, der mit der Vorschubeinheit (16) verbunden ist.

4. Erodiervorrichtung nach Anspruch 1, **dadurch gekennzeichnet, dass** eine Führung (5) vorgesehen ist, die den Erodierdraht (1) seitlich so führt, dass die Erodierdrahtspitze (101) an die gewünschte Stelle des Werkstücks (3) heranführbar ist

5. Erodiervorrichtung nach Anspruch 1, **dadurch gekennzeichnet, dass** die Vorschubeinheit (16) einen Piezo-Antrieb aufweist.

6. Erodiervorrichtung nach Anspruch 1, **dadurch gekennzeichnet, dass** die Klemmvorrichtung (14) mit der Spannungsquelle (25) verbindbar ist.

7. Erodiervorrichtung nach Anspruch 1, **dadurch gekennzeichnet, dass** eine Grobvorschubeinrichtung (10) vorgesehen ist, durch welche die Erodierdrahtspitze (101) rasch in Richtung des Werkstücks (3) bewegbar ist, wobei der Erodierdraht (1) durch die Grobvorschubeinrichtung (10) festklemmbar ist.

8. Erodiervorrichtung nach Anspruch 7, **dadurch gekennzeichnet, dass** der Erodierdraht (1) entweder durch die Grobvorschubeinrichtung (10) oder durch die Klemmvorrichtung (14) festgeklemmt wird.

9. Erodiervorrichtung nach Anspruch 7, **dadurch gekennzeichnet, dass** die Grobvorschubeinrichtung (10) zwei Vorschubrollen (12) umfasst, zwischen denen der Erodierdraht (1) einklemmbar ist.

10. Erodiervorrichtung nach Anspruch 1, **dadurch gekennzeichnet, dass** an der der Erodiervorrichtung entgegengesetzten Seite des Werkstücks (3) ein optischer Sensor (30) vorgesehen ist, mit dem Licht detektierbar ist, das beim Erodiervorgang erzeugt wird.

11. Erodiervorrichtung nach Anspruch 10, **dadurch gekennzeichnet, dass** der optische Sensor (30) eine Photozelle ist.

12. Erodiervorrichtung nach Anspruch 10 oder 11, **dadurch gekennzeichnet, dass** der optische Sensor (30) mit einer Steuereinheit (20) verbunden ist, die das Sensorsignal auswertet und als Eingangsgröße für die Steuerung des Erodiervorgangs verwendet.

13. Erodiervorrichtung nach Anspruch 12, **dadurch gekennzeichnet, dass** der optische Sensor (30) und die als Auswerteeinheit dienende Steuereinheit (20) so ausgestaltet sind, dass eine Spektralanalyse des vom optischen Sensor (30) detektierten Lichts möglich ist.

14. Erodiervorrichtung nach Anspruch 1, **dadurch gekennzeichnet, dass** an der Erodiervorrichtung ein elektromagnetischer Sensor (24) vorgesehen ist, durch welchen die beim Erodiervorgang entstehenden elektromagnetischen Wellen aufgefangen und einer Steuereinheit (20) zugeleitet werden können, die die Sensorsignale auswertet und als Eingangsgrößen für die Steuerung des Erodiervorgangs verwendet.

15. Verfahren zum Einbringen einer Ausnehmung (7) in ein Werkstück (3) mittels Elektroerosion mit einem Erodierdraht (1) und mit einer Spannungsquelle (25), die mit dem Erodierdraht (1) verbindbar ist und durch welche eine Spannung zwischen dem Werkstück (3) und dem Erodierdraht (1) anlegbar ist, und mit einer Grobvorschubeinrichtung (10), die die Erodierdrahtspitze (101) des Erodierdrahts (1) über große Distanzen vorschieben kann, und mit einer Vorschubvorrichtung (16), welche mit einer Klemmvorrichtung (14) verbunden ist, mit der der Erodierdraht (1) festklemmbar ist, wobei die Klemmvorrichtung (14) durch die Vorschubeinheit (16) in Längsrichtung des Erodierdrahts (1) bewegbar ist, **gekennzeichnet durch** folgende Verfahrensschritte:
- Bewegen des Erodierdrahts (1) mittels der Grobvorschubvorrichtung (10), bis die Erodierdrahtspitze (101) soweit von der Oberfläche des Werkstücks (3) entfernt ist, dass der Erodiervorgang gestartet werden kann,
- Klemmen des Erodierdrahts (1) mittels der Klemmvorrichtung (14),
- Freigeben des Erodierdrahts (1) **durch** die Grobvorschubeinrichtung (10),
- Bewegen der Erodierdrahtspitze (101) **durch** die Vorschubeinheit (16), wobei **durch** den zwischen dem Erodierdraht (1) und dem Werkstück (3) fließenden Strom ein Materialabtrag am Werkstück (3) erreicht wird.

16. Verfahren nach Anspruch 15, **dadurch gekennzeichnet, dass** der Erodierdraht (1) soweit vorgeschoben wird, dass die Ausnehmung (7) das Werkstück (3) durchsetzt.

17. Verfahren nach Anspruch 15, **dadurch gekennzeichnet, dass** der Durchbruch des Erodierdrahts (1) durch das Werkstück (3) mittels eines optischen Sensors (30) detektiert wird, wobei der optische Sensor (30) mit einer Steuereinheit (20) verbunden ist, die den Erodiervorgang nach dem Durchbruch abbricht.

18. Verfahren nach Anspruch 15, **dadurch gekennzeichnet, dass** der Durchbruch des Erodierdrahts (1) durch das Werkstück (3) mittels eines elektromagnetischen Sensors (24) detektiert wird, wobei der elektromagnetische Sensor (24) mit einer Steuereinheit (20) verbunden ist, die den Erodiervorgang nach dem Durchbruch abbricht.

19. Verfahren nach Anspruch 14, **dadurch gekennzeichnet, dass** die Vorschubvorrichtung die Erodierdrahtspitze (101) so bewegt, dass diese jeweils eine festgelegte Strecke (x) vorfährt und anschließend einen Teil (y) dieser Strecke (x) wieder zurückgezogen wird, wobei diese Schritte solange wiederholt werden, bis die gewünschte Tiefe und Form der Ausnehmung (7) erreicht ist.
